# DEMANDE DE BREVET EUROPEEN

(11) **EP 2 048 814 A1**
(43) Date de publication de la demande: **15.04.2009**
(21) Numéro de dépôt: 08166400.5
(22) Date de dépôt: 10.10.2008
(51) Int. Cl.: H04L 9/32

(54) **Procédé d'authentification biométrique, programme d'ordinateur, serveur d'authentification, terminal et objet portatif correspondants.**

(30) Priorité: 12.10.2007 FR 0758295
(71) Demandeur: Compagnie Industrielle et Financiere d'Ingenierie Ingenico, 92200 Neuilly sur Seine (FR)
(72) Inventeur: Naccache, David, 75018, PARIS (FR)
(74) Mandataire: Bioret, Ludovic

(57) **Abrégé**

L'invention concerne un procédé d'authentification biométrique, auprès d'un serveur d'authentification, d'un utilisateur à authentifier, à partir d'un objet portatif comprenant au moins un capteur biométrique, ledit objet portatif étant adapté pour coopérer avec un terminal,
ledit procédé comprenant une étape de capture, par un objet portatif, d'un échantillon biométrique à comparer provenant dudit utilisateur à authentifier.
Selon l'invention, un tel objet portatif transmet audit serveur d'authentification ledit échantillon biométrique, sous une forme sécurisée, et un tel serveur d'authentification détermine une signature à authentifier à partir dudit échantillon biométrique, puis la compare à une signature de référence.

## Description

### 1. Domaine de l'invention

Le domaine de l'invention est celui de l'authentification de personnes, ou le cas échéant d'animaux, par biométrie.

Plus précisément, l'invention concerne les systèmes d'authentification biométrique à base d'objets portatifs, tels que des cartes à puce, contenant d'une part des données personnelles sécurisées et d'autre part des moyens de capture d'une empreinte biométrique.

### 2. Solutions de l'art antérieur

La biométrie est couramment utilisée afin d'identifier et/ou authentifier des personnes sur la base de caractéristiques physiques individuelles.

Une telle identification par biométrie, mise en oeuvre par un système d'authentification biométrique, comprend les trois étapes principales suivantes :
- capture d'un échantillon biométrique de référence provenant de la personne autorisée (par exemple une image de référence d'une personne autorisée) ;
- création d'un fichier de référence, ou « signature de référence » (qui comprend au moins un élément caractéristique de l'image de référence), par un traitement spécifique appliqué à l'échantillon biométrique de référence, puis stockage de ce fichier de référence ;
- vérification dans laquelle, de la même manière que dans les étapes de capture et de création précitées, on réalise une capture d'un échantillon biométrique à comparer provenant de la personne à authentifier et une création d'un fichier à comparer, ou « signature à comparer », puis une comparaison du fichier de référence au fichier à comparer pour déterminer leur taux de similitude et prendre la décision qui s'impose.

Ainsi, les informations stockées ne sont pas les échantillons biométriques, mais des modèles mathématiques de ces échantillons qui distinguent un échantillon biométrique d'un autre. Ce modèle est appelé une « signature » ou un « gabarit ».

La création d'une signature de référence s'effectue pendant une phase dite d'enrôlement (ou d'apprentissage) qui regroupe les étapes de capture de l'échantillon biométrique de référence, de création et de stockage de la signature de référence et de stockage d'informations sur l'identité de la personne comme son nom, son prénom, son identifiant (numéro d'identification personnel).

L'authentification d'une personne par biométrie peut notamment se baser sur la mesure (ou capture) d'au moins un des échantillons biométriques suivants :
- son empreinte digitale ;
- son empreinte palmaire (empreinte de la main) ;
- l'empreinte de sa rétine ;
- l'empreinte de son iris ;
- l'empreinte de son visage (la forme du visage) ;
- . . .

Il existe des systèmes d'authentification biométrique à base d'un lecteur de cartes à puce intégrant un capteur biométrique (par exemple un capteur d'empreintes digitales) et un processeur spécialisé.

Selon cette technique connue, l'empreinte de référence (ou image de référence) de l'utilisateur autorisé est stockée dans la puce de la carte et la vérification est réalisée dans le terminal, à partir des données de cette carte à puce. Quand l'empreinte de référence stockée dans la carte concorde avec l'empreinte à comparer (de l'utilisateur à authentifier) saisie par le capteur, la carte est déverrouillée et, par exemple, autorise ensuite des transactions électroniques sécurisées.

Cependant, un inconvénient d'un tel système d'authentification biométrique est due au fait que l'étape de vérification (dans laquelle on compare la signature de référence avec la signature à comparer afin d'authentifier un utilisateur à authentifier) est mise en oeuvre dans le lecteur de carte à puce. En conséquence, les signatures associées aux empreintes doivent être stockées au moins momentanément dans le lecteur. Elles peuvent donc être piratées, altérées et/ou ré-utilisées (« rejouées ») frauduleusement à partir du lecteur par un utilisateur malintentionné.

Il existe également des systèmes d'authentification biométrique (tel que décrit par exemple dans le document intitulé « Biométrie : la vérification se fait maintenant dans la carte Java » publié dans « electronique international Hebdo » le 16 décembre 1999 sous le numéro 373) dans lesquels une carte à puce, équipée d'un capteur biométrique (par exemple un capteur thermique d'empreintes), réalise elle-même l'étape de vérification. C'est alors la carte qui compare la signature de référence (correspondant à l'empreinte de référence) avec la signature à comparer (correspondant à l'empreinte à comparer), sans que celles-ci ne sortent de la carte.

Ainsi, du fait que la création, le stockage et la comparaison des signatures sont réalisés dans la carte à puce, les signatures de référence et les signatures à comparer ne transitent pas par un terminal de lecture de la carte à puce (lecteur de carte à puce, guichet automatique, ...) les problèmes précités de sécurisation de l'authentification sont en grande partie résolus.

Cependant un inconvénient de ce type de carte à puce à authentification biométrique est sa complexité, et par conséquent son coût. En effet, le traitement mathématique de détermination de signature et de comparaison est complexe, et nécessite une forte puissance de calcul et des moyens de mémorisation importants, peu compatibles avec des objectifs de production de masse à coût réduit, et avec les dimensions d'une carte à puce ou de tout autre objet portatif.

Un autre inconvénient de cette approche, sur le plan de la sécurité, est que la carte à puce contient en permanence la signature de référence, qu'un tiers malintentionné pourrait tenter d'extraire, par exemple après avoir volé la carte.

### 3. Objectifs de l'invention

L'invention a notamment pour objectif de pallier ces inconvénients de l'art antérieur.

Plus précisément, un objectif de l'invention, dans au moins un de ses modes de réalisation, est de fournir une technique d'authentification biométrique à base d'objets portatifs à capteur biométrique qui permette d'assurer la sécurisation de l'authentification de façon efficace, sans augmenter de façon importante la complexité ni le coût de ces objets portatifs.

L'invention a ainsi pour objectif de fournir une telle technique qui évite le transfert de données sensibles à un terminal, et le stockage de telles données sur l'objet portatif.

Un autre objectif de l'invention est de limiter les traitements effectués dans l'objet portatif, en particulier par rapport aux objets réalisant eux-mêmes l'authentification.

### 4. Exposé de l'invention

Le principe général de l'invention consiste à déporter la création, le stockage et la comparaison des signatures nécessaires à l'authentification, au niveau d'un serveur d'authentification.

Ainsi, ni les signatures à comparer, ni les signatures de référence ne transitent pas par un terminal et/ou un réseau de communication, puisqu'elles sont créées, stockées et comparées en dehors de celui-ci (par exemple dans le serveur), permettant donc de limiter les tentatives de piratage du terminal, et donc de sécuriser l'authentification.

De plus, les signatures n'étant pas stockées dans l'objet portatif, et les calculs de détermination de signature et de comparaison n'étant pas effectués par l'objet portatif, l'invention permet de réaliser cet objet portatif à faible coût.

L'invention propose donc une solution nouvelle qui ne présente pas les inconvénients de l'art antérieur, sous la forme d'un procédé d'authentification biométrique, auprès d'un serveur d'authentification, d'un utilisateur à authentifier, à partir d'un objet portatif comprenant au moins un capteur biométrique, ledit objet portatif étant adapté pour coopérer avec un terminal, ledit procédé comprenant une étape de capture, par un objet portatif, d'un échantillon biométrique à comparer provenant dudit utilisateur à authentifier.

Selon l'invention, l'objet portatif transmet audit serveur d'authentification ledit échantillon biométrique, sous une forme sécurisée, et ledit serveur d'authentification détermine une signature à authentifier à partir dudit échantillon biométrique, puis la compare à une signature de référence.

Ainsi, c'est le serveur d'authentification qui crée une signature à authentifier, à partir d'un échantillon biométrique transmis par l'objet portatif, de façon sécurisée, puis qui effectue la comparaison entre la signature à authentifier et une signature de référence.

Les principales étapes du traitement d'authentification, à savoir la création et la comparaison des signatures (de référence et à authentifier), sont donc effectuées de manière sécurisée dans le serveur, et non dans le terminal ou l'objet portatif.

De plus, la transmission d'un échantillon biométrique est faite de manière sécurisée, limitant ainsi les risques liés à la transmission d'informations servant à l'authentification.

Préférentiellement, le procédé d'authentification selon l'invention comprend les étapes suivantes :
- transmission, par ledit serveur d'authentification, d'un défi audit objet portatif ;
- chiffrement, par ledit objet portatif, dudit échantillon biométrique à comparer, à l'aide dudit défi, délivrant un échantillon biométrique chiffré ;
- transmission, par ledit objet portatif, dudit échantillon biométrique chiffré audit serveur d'authentification ;
- validation, par ledit serveur d'authentification, de la réponse audit défi ;
- déchiffrement, par ledit serveur d'authentification, dudit échantillon chiffré, délivrant un échantillon déchiffré ;
- détermination, par ledit serveur d'authentification, d'une signature à authentifier, à partir dudit échantillon déchiffré ;
- authentification, par ledit serveur, dudit utilisateur à authentifier, par comparaison de ladite signature à authentifier à une signature de référence, délivrant une décision, positive ou négative, d'authentification ;
- transmission, par ledit serveur d'authentification audit terminal, de ladite décision d'authentification.

Ainsi, selon l'invention, une partie des "outils" utilisés pour le chiffrement des échantillons biométriques capturés par l'objet portatif sont transmis à celui-ci par le serveur, sous la forme d'un défi, permettant ensuite une meilleure sécurisation de la transmission des échantillons biométriques à authentifier.

En effet, l'objet portatif utilise ensuite ce défi pour chiffrer l'échantillon biométrique à authentifier et transmettre ainsi un échantillon biométrique chiffré au serveur d'authentification. L'échantillon ainsi chiffré ne peut pas ensuite être ré-utilisé frauduleusement (principe du « rejeu »), puisqu'une nouvelle tentative d'authentification entraînera la génération d'un nouveau défi, auquel l'échantillon chiffré précédent ne correspond pas.

De plus, l'utilisation de ce défi pour le chiffrement permet au serveur de reconnaître que l'échantillon biométrique chiffré correspond bien à une réponse au défi transmis préalablement. Le procédé selon l'invention permet ainsi de s'affranchir de transferts comprenant un échantillon biométrique non chiffré à l'aide du défi.

Le serveur valide donc la réponse au défi et déchiffre l'échantillon biométrique chiffré reçu, délivrant ainsi un échantillon biométrique déchiffré, qui lui sert ensuite à créer une signature à authentifier.

Le serveur peut ensuite comparer la signature à authentifier à une signature de référence, afin de délivrer une décision d'authentification.

Cette décision peut être positive ou négative, selon un résultat de la comparaison.

Ainsi, les moyens de déchiffrement de l'échantillon biométrique chiffré transmis par l'objet portatif sont situés dans le serveur, et la comparaison des signatures et la décision d'authentification sont effectuées dans le serveur, et non dans le terminal ou l'objet portatif, permettant également une meilleure sécurisation.

Une fois la décision d'authentification prise, le serveur la transmet au terminal, qui s'en sert pour accepter ou non l'authentification de l'utilisateur de l'objet portatif.

Par exemple, l'authentification peut servir à valider ou non une transaction, à l'aide d'une carte à puce d'un utilisateur et d'un terminal de paiement. Dans ce cas, l'authentification permet au terminal d'accepter ou non la transaction, en fonction de la décision prise par le serveur d'authentification.

Selon un mode de réalisation avantageux, ladite étape de transmission d'un défi audit objet portatif est effectuée en réponse à une sollicitation d'authentification, transmise par ledit terminal ou ledit objet portatif audit serveur d'authentification.

Ainsi, l'objet portatif, ou le terminal, sollicite d'abord le serveur pour une authentification. Le serveur, en réponse à cette sollicitation d'authentification, transmet un défi à l'objet portatif, dont celui-ci se servira notamment pour chiffrer un échantillon biométrique à comparer et le transmettre en réponse au serveur (comme décrit précédemment).

Ce dialogue entre le serveur et l'objet portatif, par l'intermédiaire du terminal, permet d'améliorer la sécurisation de l'authentification. En effet, dans ce cas, le serveur n'accepte pas de valider un échantillon biométrique chiffré sans avoir au préalable reçu une sollicitation d'authentification et transmis un défi.

Pour renforcer encore la sécurisation, le défi transmis en réponse à une sollicitation d'authentification peut être différent à chaque nouvelle sollicitation.

Selon un aspect avantageux de l'invention, ladite étape de transmission dudit échantillon biométrique chiffré comprend les étapes suivantes :
- transmission, par ledit objet portatif audit terminal, dudit échantillon biométrique chiffré ; et
- transmission, par ledit terminal audit serveur d'authentification, dudit échantillon biométrique chiffré.

Ainsi, l'échantillon biométrique chiffré par l'objet portatif est d'abord transmis par celui-ci au terminal, qui lui-même le retransmet au serveur chargé de l'authentification. En effet, il est courant qu'un objet portatif ne possède pas de moyens de communication avec un serveur d'authentification, et le terminal permet alors la transmission entre l'objet portatif et le serveur.

Selon un autre aspect de l'invention, le procédé d'authentification biométrique comprend une phase d'apprentissage comprenant les étapes suivantes :
- capture d'un échantillon biométrique de référence provenant d'un utilisateur autorisé ;
- création, dans ledit serveur d'authentification, de ladite signature de référence à partir dudit échantillon biométrique de référence ;
- stockage, par ledit serveur d'authentification, de ladite signature de référence dans ledit serveur d'authentification.

Cette phase d'apprentissage permet la création, dans le serveur d'authentification, de signatures de référence, par exemple stockées dans une base de données, servant lors de l'authentification à la comparaison avec des signatures à authentifier (générées par le serveur à partir d'échantillons biométriques chiffrés transmis par l'objet portatif). Ceci permet ainsi de ne pas avoir à stocker ces signatures de référence dans un objet portatif, augmentant ainsi sa sécurité et réduisant sa complexité, et donc son coût.

Selon l'invention, ledit capteur biométrique appartient au groupe comprenant :
- les capteurs d'empreintes digitales ;
- les capteurs d'empreintes palmaires ;
- les capteurs d'empreintes de rétine ;
- les capteurs d'empreintes d'iris ;
- les capteurs de formes de visage.

Ainsi, une authentification basée sur différentes caractéristiques biométriques est possible, selon le capteur biométrique intégré sur l'objet portatif.

L'invention concerne également les programmes d'ordinateur téléchargeables depuis au moins un réseau de communication et/ou enregistrés sur un support lisible par ordinateur et/ou exécutables par un processeur, comprenant des instructions de code de programme pour la mise en oeuvre du procédé d'authentification décrit précédemment.

Un autre aspect de l'invention concerne un serveur d'authentification comprenant des moyens d'authentification biométrique d'un utilisateur à authentifier à partir d'un objet portatif comprenant au moins un capteur biométrique, ledit objet portatif étant adapté pour coopérer avec un terminal de lecture.

Selon l'invention, lesdits moyens d'authentification biométrique comprennent :
- des moyens de réception, sous une forme sécurisée, d'un échantillon biométrique chiffré provenant dudit objet portatif, à l'issue d'une étape de capture et de chiffrement dudit échantillon biométrique à comparer provenant dudit utilisateur à authentifier ;
- des moyens de détermination d'une signature à authentifier à partir dudit échantillon biométrique ;
- des moyens de comparaison de ladite signature à authentifier à une signature de référence.

Préférentiellement, un tel serveur d'authentification comprend :
- des moyens de transmission d'un défi audit objet portatif ;
- des moyens de réception et de validation de la réponse audit défi provenant dudit objet portatif ;
- des moyens de déchiffrement dudit échantillon chiffré, délivrant un échantillon déchiffré ;
- des moyens de détermination d'une signature à authentifier, à partir dudit échantillon déchiffré ;
- des moyens d'authentification dudit utilisateur à authentifier, par comparaison de ladite signature à authentifier à une signature de référence, délivrant une décision, positive ou négative, d'authentification ;
- des moyens de transmission audit terminal, de ladite décision d'authentification.

Selon un mode de réalisation avantageux, un tel serveur d'authentification comprend des moyens d'apprentissage comprenant :
- des moyens de capture d'un échantillon biométrique de référence provenant d'un utilisateur autorisé ;
- des moyens de création de ladite signature de référence à partir dudit échantillon biométrique de référence ;
- de moyens de stockage de ladite signature de référence dans ledit serveur d'authentification.

Ainsi, un tel serveur est notamment apte à mettre en oeuvre les différentes étapes du procédé d'authentification décrit précédemment se déroulant dans un serveur d'authentification.

Un tel serveur peut être notamment un serveur d'authentification d'un organisme bancaire, ou un serveur d'authentification pour la sécurisation d'un bâtiment ...

L'invention concerne également un terminal de lecture d'objet portatif adapté pour recevoir un objet portatif comprenant au moins un capteur biométrique dédié à une authentification biométrique, auprès d'un serveur d'authentification, d'au moins un utilisateur à authentifier.

Selon l'invention, un tel terminal comprend :
- des moyens de réception d'un échantillon biométrique chiffré provenant dudit utilisateur à authentifier et transmis par ledit objet portatif ;
- des moyens de transmission dudit échantillon biométrique chiffré audit serveur d'authentification via un réseau de communication ;
- des moyens de réception d'une décision d'authentification concernant ledit utilisateur à authentifier en fonction d'un résultat d'une comparaison d'une signature à authentifier, créée à partir dudit échantillon biométrique chiffré, par ledit serveur d'authentification, à une signature de référence, ladite décision étant transmise par ledit serveur d'authentification via ledit réseau de communication.

Un tel terminal est notamment apte à mettre en oeuvre les étapes du procédé d'authentification décrit précédemment se déroulant dans le terminal.

Un tel terminal peut notamment être un terminal de paiement, un terminal permettant l'accès à un bâtiment ...

Enfin, l'invention concerne un objet portatif comprenant au moins un capteur biométrique dédié à une authentification biométrique, auprès d'un serveur d'authentification, d'au moins un utilisateur à authentifier, ledit objet étant adapté pour coopérer avec un terminal de lecture, ledit capteur biométrique comprenant des moyens de capture d'un échantillon biométrique à comparer provenant dudit utilisateur à authentifier.

Selon l'invention, un tel objet portatif comprend également :
- des moyens de réception d'un défi, transmis par ledit serveur d'authentification ;
- des moyens de chiffrement dudit échantillon biométrique à comparer, à l'aide dudit défi, délivrant un échantillon biométrique chiffré ;
- des moyens de transmission dudit échantillon biométrique chiffré audit serveur d'authentification via un réseau de communication. Préférentiellement, un tel objet portatif est une carte à puce.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente les étapes principales du procédé d'authentification biométrique d'un utilisateur à authentifier selon un mode de réalisation particulier de l'invention ;
- la figure 2 illustre un système selon l'invention dans lequel peut être mis en oeuvre le procédé d'authentification biométrique de la figure 1 ;
- la figure 3 présente les sous-étapes principales d'une étape d'identification de la carte de paiement par le serveur d'authentification selon le mode de réalisation particulier précité de l'invention ;
- la figure 4 présente les étapes de la phase d'apprentissage du procédé d'authentification biométrique selon le mode de réalisation particulier précité de l'invention ;
- la figure 5 illustre la structure simplifiée d'un serveur d'authentification selon le mode de réalisation particulier de l'invention.

### 6. Description d'un mode de réalisation de l'invention

On se place dans la suite dans le cadre d'un mode de réalisation particulier de l'invention selon lequel un utilisateur à authentifier, détenteur d'une carte à puce équipée d'un capteur biométrique, souhaite accéder à un service nécessitant qu'il s'authentifie au préalable auprès d'un serveur d'authentification distant. Ce service auquel souhaite accéder l'utilisateur à authentifier peut notamment être un service bancaire. Par exemple, ce service peut être le paiement d'un produit ou d'un service par un utilisateur acheteur (qui est l'utilisateur à authentifier) à un commerçant (utilisateur vendeur) au moyen de la carte à puce, qui est une carte de paiement émise par une banque, par l'intermédiaire d'un terminal de paiement (terminal lecteur de carte à puce).

Dans d'autres modes de mise en oeuvre, l'objet portatif portant le capteur biométrique peut être un porte-clés, une bague, un boîtier de forme quelconque,... Le capteur peut également être intégré à un appareil assurant d'autres fonctions, tel qu'un téléphone portable.

Le capteur biométrique est, dans le mode de réalisation décrit, un capteur d'empreintes digitales. Cependant, bien entendu, le capteur biométrique peut être tout autre type de capteur biométrique, par exemple l'un des capteurs appartenant au groupe comprenant :
- les capteurs d'empreintes palmaires ;
- les capteurs d'empreintes de rétines ;
- les capteurs d'empreintes d'iris ;
- les capteurs de formes de visages ...

On peut également prévoir une combinaison de ces capteurs.

Préférentiellement, pour que l'utilisateur acheteur puisse obtenir une autorisation par la banque émettrice de la carte de paiement pour effectuer le paiement, il lui est nécessaire de s'authentifier (comme étant le propriétaire de la carte de paiement ou utilisateur autorisé) auprès du serveur d'authentification distant appartenant à la banque.

Pour ce faire, l'utilisateur acheteur peut insérer la carte de paiement dans un terminal de paiement, adapté pour la lecture de la carte de paiement et fourni par le commerçant, tout en posant le doigt approprié (par exemple l'index de sa main droite) sur le capteur d'empreintes de la carte de paiement.

Ainsi, le capteur d'empreintes de la carte de paiement capture une empreinte, dite empreinte à comparer (ou échantillon biométrique à comparer), de l'index de la main droite de l'utilisateur acheteur qui est, tel qu'expliqué ci-après, transmise au serveur d'authentification distant de la banque. Ce dernier peut alors transmettre au terminal de paiement, une décision concernant l'authentification de l'utilisateur acheteur, décision qu'il aura préalablement prise en fonction du résultat d'une comparaison d'une signature à comparer (obtenue à partir de l'empreinte à comparer) avec une signature de référence.

Cette décision peut être :
- « l'utilisateur acheteur est authentifié comme étant le titulaire de la carte et est donc (le cas échéant, dans la limite du solde disponible sur son compte en banque) autorisé à effectuer le paiement » ou
- « l'utilisateur acheteur n'est pas authentifié comme étant le titulaire de la carte et n'est donc pas autorisé à effectuer le paiement ».

Ainsi, par exemple, la saisie du code secret personnel peut être avantageusement remplacée, ou complétée, par la saisie de l'empreinte du propriétaire afin d'authentifier le propriétaire de la carte de paiement.

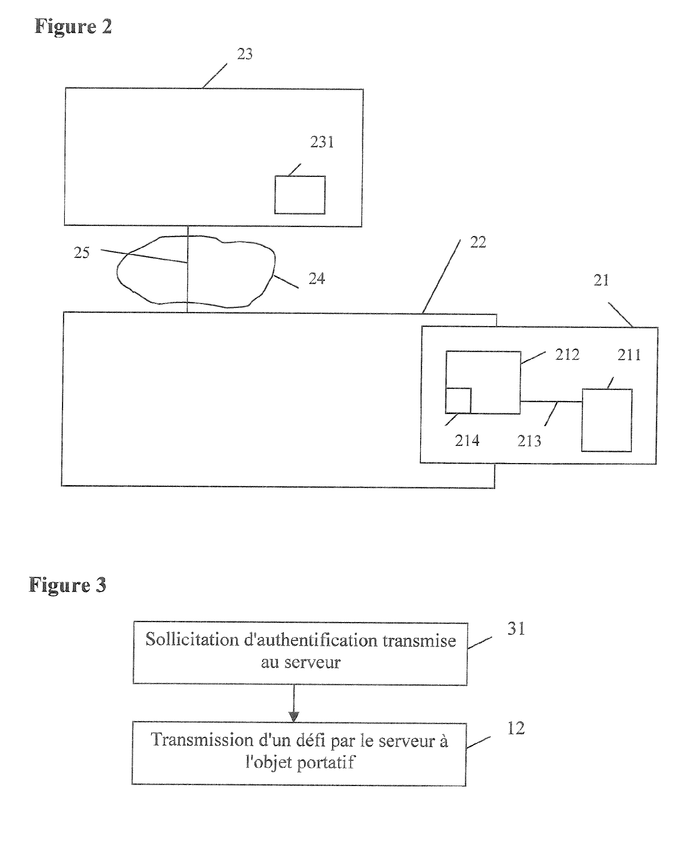

On présente ci-dessous, en relation avec la figure 2, un système mettant en oeuvre l'invention dans lequel peut être mis en oeuvre le procédé d'authentification biométrique selon le mode de réalisation particulier précité de l'invention.

Le système comprend :
- la carte de paiement (carte à puce) 21 sur laquelle est intégré le capteur d'empreintes digitales 211 (capteur biométrique) qui est électriquement connecté via un élément de connexion électrique 213 (par exemple une ou plusieurs pistes électriques) à la puce 212 de la carte ;
- le terminal de paiement 22 (terminal de lecture de la carte à puce) qui est adapté de manière classique pour recevoir la carte de paiement 21 ;
- le serveur d'authentification 23 qui est par exemple situé dans la banque.

Le terminal est connecté au serveur 23 via un réseau de communication 24 qui est par exemple le réseau Internet au moyen, par exemple d'une liaison sans fil 25 qui permet donc l'échange d'informations entre le terminal de paiement 22 et le serveur d'authentification 23.

La puce 212 de la carte 21 comprend des pistes électriques prévues pour coopérer avec des éléments de contact du terminal de paiement afin de permettre l'échange d'information, sous forme de signaux électriques, entre la carte de paiement 21 et le terminal de paiement 22 lorsque la carte 21 est insérée dans le terminal 22. On se place dans la suite (tel qu'illustré par la figure 2) dans une configuration où la carte 21 est insérée dans le lecteur 22.

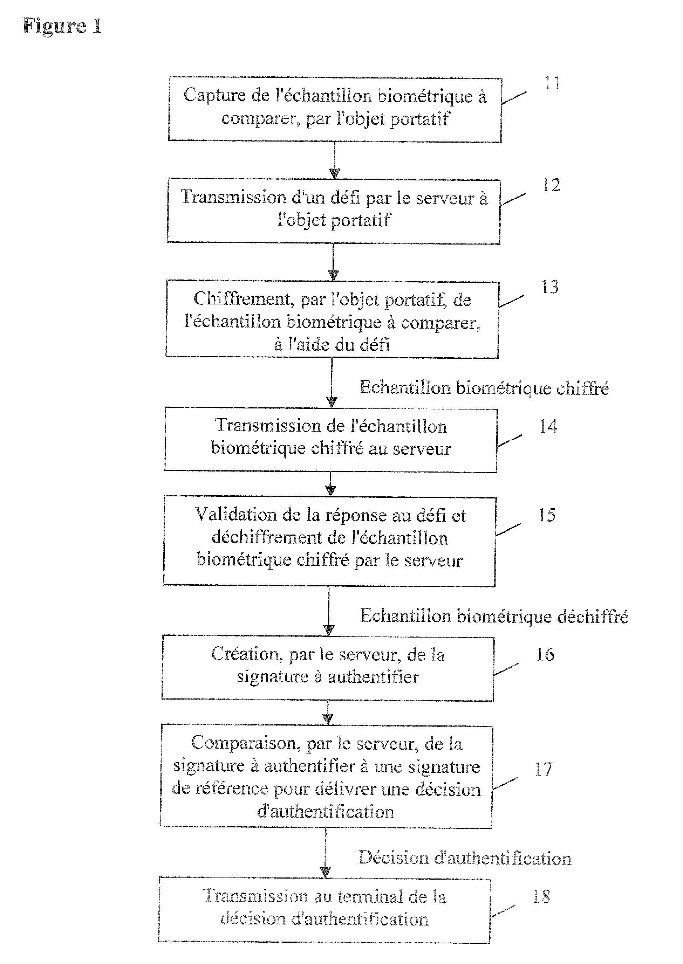

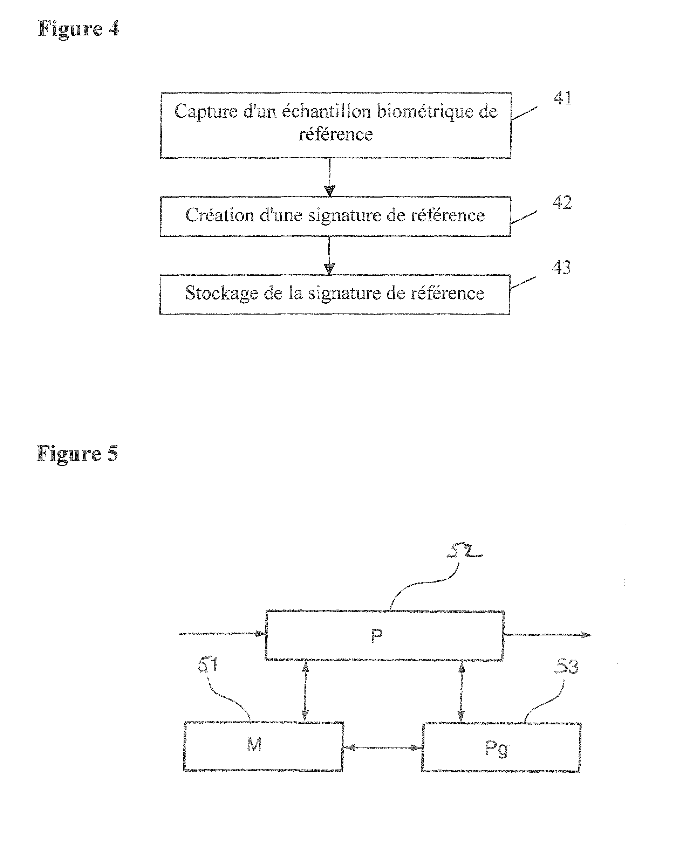

On présente ci-dessous, en relation avec les figures 1 et 4, les étapes principales du procédé d'authentification biométrique de l'utilisateur à authentifier selon le mode de réalisation particulier précité de l'invention.

Préférentiellement, le procédé comprend une phase d'apprentissage et une phase de vérification.

On décrit ci-après cette phase d'apprentissage, en relation avec la figure 4. Par exemple, cette phase est réalisée par le gestionnaire du service, en lien avec le serveur d'authentification.

Dans une étape 41 de capture d'une empreinte de référence (ou échantillon biométrique de référence), le titulaire (utilisateur autorisé) de la carte de paiement 21 pose le doigt approprié (index de sa main droite par exemple, tel que précédemment indiqué) sur un capteur d'empreintes digitales (non représenté) relié au serveur d'authentification. Ainsi, le capteur d'empreintes enregistre l'empreinte de l'index de la main droite du titulaire qui constitue l'empreinte de référence.

L'empreinte de référence est ensuite transmise au serveur d'authentification 23.

Puis, dans une étape 42 de création d'une signature de référence (à partir de l'empreinte de référence), une unité de traitement (231), par exemple un microprocesseur, du serveur d'authentification 23 génère la signature de référence en appliquant un algorithme de création de signature, connu en soi, à l'échantillon de référence.

Puis, dans une étape de stockage 43 de la signature de référence, le serveur d'authentification 23 stocke la signature de référence dans une mémoire (non représentée sur la figure 2) par exemple interne au serveur 23.

On décrit maintenant la phase de vérification, en relation avec la figure 1.

Dans une étape 11 de capture d'un échantillon biométrique à comparer (ou empreinte à comparer), l'utilisateur acheteur (utilisateur à authentifier) détenteur de la carte de paiement 21, pose l'index de sa main droite sur le capteur d'empreintes digitales 211 de la carte 21. Ainsi, le capteur d'empreintes 211 enregistre l'empreinte du doigt du titulaire qui constitue l'empreinte, ou échantillon, à comparer.

Puis, cette empreinte à comparer est transmise du capteur 211 à la puce 212 de la carte de paiement 21 via une connexion électrique 213.

A la réception d'un défi transmis par le serveur d'authentification 23 lors d'une étape 12, la carte à puce effectue un chiffrement de l'échantillon biométrique à comparer, lors d'une étape 13.

Le chiffrement de l'échantillon biométrique à comparer est effectué par les moyens de cryptage 214 présents dans la puce 212 de la carte de paiement 21, qui mettent en oeuvre un chiffrement, ou cryptage, au moyen d'un algorithme de cryptage déterminé également connu par les moyens de traitement 321 du serveur d'authentification 23.

Ce chiffrement tient compte du défi envoyé par le serveur, et permet par la suite au serveur de valider la transmission de l'échantillon biométrique chiffré.

En effet, seul le serveur d'authentification 23 et la carte de paiement 21 connaissent l'algorithme de cryptage utilisé.

D'autre part, un nouveau défi est généré par le serveur d'authentification 23 à chaque mise en oeuvre du procédé d'authentification selon l'invention.

Ainsi, à un défi envoyé par le serveur correspond une transmission unique d'un échantillon biométrique chiffré par la carte à puce.

De plus, comme décrit en relation avec la figure 3, le défi est envoyé, lors d'une phase permettant l'identification de la carte, par le serveur en réponse à une sollicitation d'authentification, transmise par le terminal ou la carte, lors d'une étape 31, préalable à l'étape 12 de transmission du défi.

Ainsi, l'utilisation d'un tel défi, en réponse à une sollicitation d'authentification, permet par exemple de s'assurer qu'un utilisateur malintentionné, disposant de moyens d'interception de l'échantillon à comparer dans le terminal, ne peut pas effectuer un « rejeu », c'est-à-dire simuler une demande d'authentification d'un utilisateur autorisé auprès du serveur d'authentification, par la simple transmission de l'échantillon à comparer qu'il aura au préalable intercepté (grâce aux moyens d'interception), lors d'une authentification d'un utilisateur autorisé.

En effet, le serveur, n'ayant pas reçu de sollicitation d'authentification au préalable, et donc pas transmis un défi, ne peut pas valider l'échantillon biométrique reçu.

De plus, même si l'utilisateur malintentionné transmet une sollicitation d'authentification au serveur, l'utilisateur malintentionné ne peut pas renvoyer au serveur l'échantillon biométrique correctement crypté, une fois qu'il a reçu le défi, puisqu'il ne dispose que d'un échantillon déjà crypté, à l'aide d'un précédent défi.

Ainsi, lors de l'étape d'analyse, le serveur peut se rendre compte que la tentative d'authentification est frauduleuse, ce qui, par exemple, bloque le processus d'authentification, et dans notre exemple, la transaction.

Ainsi, la mise en oeuvre de la sollicitation d'authentification et du défi permettent de sécuriser le procédé d'authentification selon l'invention.

Lors d'une étape suivante de transmission 14, la puce 212 de la carte de paiement 21 transmet l'échantillon biométrique chiffré au serveur d'authentification, par l'intermédiaire du terminal 22.

Ainsi, le terminal de paiement 22 (par exemple via les pistes électriques de la puce 212 et les éléments de contact du terminal de paiement 22, ou par liaison sans contact) reçoit un échantillon biométrique chiffré de la part de la carte et le retransmet au serveur d'authentification 23 (via la liaison (filaire ou sans fil) 25 du réseau de communication 24).

Ainsi, le terminal n'est utilisé que pour le transfert d'un échantillon biométrique chiffré de la carte à puce vers le serveur d'authentification. Le terminal ne détient donc pas d'échantillon biométrique à comparer non chiffré, ni de signature à comparer, ce qui renforce la sécurité du procédé selon l'invention.

Le serveur reçoit donc l'échantillon biométrique chiffré et valide, lors d'une étape de validation 15, la réponse au défi.

Ainsi, si le serveur reconnaît que l'échantillon biométrique chiffré transmis correspond bien au défi envoyé, il déchiffre alors l'échantillon biométrique chiffré pour obtenir un échantillon biométrique déchiffré.

S'il ne reconnaît pas une réponse au défi préalablement envoyé, il ne poursuit pas la procédure de déchiffrement de l'échantillon biométrique chiffré et met fin à l'authentification en cours.

Le serveur, par exemple l'unité de traitement 231 précitée du serveur, utilise, lors d'une étape de création de signature 16, cet échantillon biométrique déchiffré pour créer une signature à authentifier, destinée à être comparée à la signature de référence crée précédemment (étape 42 de la figure 4 décrite ci-dessus).

La signature à authentifier est générée en appliquant l'algorithme de création de signature à l'échantillon biométrique déchiffré.

Puis, dans une étape 17 de comparaison, le serveur d'authentification 23 (par exemple par l'intermédiaire de son unité de traitement 231) compare la signature à authentifier avec la signature de référence préalablement stockée et prend une décision concernant l'authentification de l'utilisateur à authentifier (tel que précédemment indiqué), en fonction d'un résultat de la comparaison.

Enfin, dans une étape 18, le serveur d'authentification 23 transmet, au terminal de paiement 22 (via la liaison sans fil 25), la décision d'authentification concernant l'authentification de l'utilisateur à authentifier.

On présente, en relation avec la figure 5, la structure simplifiée d'un serveur d'authentification selon le mode de réalisation particulier décrit ci-dessus.

Comme illustré en figure 5, un tel serveur comprend une mémoire 51 (M), une unité de traitement 52 (P), équipée par exemple d'un microprocesseur, et pilotée par le programme d'ordinateur 53 (Pg), mettant en oeuvre le procédé d'authentification selon l'invention.

A l'initialisation, les instructions de code du programme d'ordinateur 53 sont par exemple chargées dans une mémoire RAM avant d'être exécutées par le processeur de l'unité de traitement 52.

Le microprocesseur de l'unité de traitement 52 met en oeuvre les étapes du procédé d'authentification décrit précédemment de façon à authentifier un utilisateur à authentifier.

Pour cela, le serveur d'authentification comprend des moyens d'authentification biométrique de l'utilisateur à authentifier à partir d'une carte à puce comprenant au moins un capteur biométrique, ladite carte à puce étant adaptée pour coopérer avec un terminal de lecture de la carte à puce.

Les moyens d'authentification biométrique comprennent :
- des moyens de transmission d'un défi audit objet portatif ;
- des moyens de réception, sous une forme sécurisée, d'un échantillon biométrique chiffré provenant dudit objet portatif, à l'issue d'une étape de capture et de chiffrement dudit échantillon biométrique à comparer provenant dudit utilisateur à authentifier ;
- des moyens de validation de la réponse audit défi provenant dudit objet portatif ;
- des moyens de déchiffrement dudit échantillon chiffré, délivrant un échantillon déchiffré ;
- des moyens de détermination d'une signature à authentifier à partir dudit échantillon biométrique déchiffré ;
- des moyens de comparaison de ladite signature à authentifier à une signature de référence ;
- des moyens de transmission audit terminal, d'une décision d'authentification tenant compte d'un résultat de la comparaison.

Les moyens d'authentification comprennent également des moyens de mise en oeuvre de la phase d'apprentissage du procédé d'authentification décrite ci-dessus.

Ces moyens d'authentification biométrique sont pilotés par le microprocesseur de l'unité de traitement 52.

Bien entendu, la présente invention s'applique également à la restriction de l'accès à un site protégé, ou à un serveur de données ou un réseau, ou un véhicule, et plus généralement à un dispositif ou un système. Dans ce cas, l'utilisateur à authentifier peut par exemple s'authentifier auprès d'un serveur d'authentification distant par insertion de sa carte à puce à capteur d'empreinte (sur lequel il pose le doigt approprié) dans un lecteur adapté.

La présente invention peut s'appliquer également au cas de la restriction de l'accès à un service en téléphonie mobile ou même à toute application nécessitant une restriction de l'accès à certaines personnes ou animaux.

## Revendications

1. Procédé d'authentification biométrique, auprès d'un serveur d'authentification, d'un utilisateur à authentifier, à partir d'un objet portatif comprenant au moins un capteur biométrique, ledit objet portatif étant adapté pour coopérer avec un terminal,
ledit procédé comprenant une étape de capture, par un objet portatif, d'un échantillon biométrique à comparer provenant dudit utilisateur à authentifier,
**caractérisé en ce que** ledit objet portatif transmet audit serveur d'authentification ledit échantillon biométrique, sous une forme sécurisée,
et **en ce que** ledit serveur d'authentification détermine une signature à authentifier à partir dudit échantillon biométrique, puis la compare à une signature de référence.

2. Procédé d'authentification selon la revendication 1, **caractérisé en ce qu'**il comprend les étapes suivantes :
- transmission, par ledit serveur d'authentification, d'un défi audit objet portatif ;
- chiffrement, par ledit objet portatif, dudit échantillon biométrique à comparer, à l'aide dudit défi, délivrant un échantillon biométrique chiffré ;
- transmission, par ledit objet portatif, dudit échantillon biométrique chiffré audit serveur d'authentification ;
- validation, par ledit serveur d'authentification, de la réponse audit défi ;
- déchiffrement, par ledit serveur d'authentification, dudit échantillon chiffré, délivrant un échantillon déchiffré ;
- détermination, par ledit serveur d'authentification, d'une signature à authentifier, à partir dudit échantillon déchiffré ;
- authentification, par ledit serveur, dudit utilisateur à authentifier, par comparaison de ladite signature à authentifier à une signature de référence, délivrant une décision, positive ou négative, d'authentification ;
- transmission, par ledit serveur d'authentification audit terminal, de ladite décision d'authentification.

3. Procédé selon la revendication 2, **caractérisé en ce que** ladite étape de transmission d'un défi audit objet portatif est effectuée en réponse à une sollicitation d'authentification, transmise par ledit terminal ou ledit objet portatif audit serveur d'authentification.

4. Procédé selon l'une quelconque des revendications 2 et 3, **caractérisé en ce que** ladite étape de transmission dudit échantillon biométrique chiffré comprend les étapes suivantes :
- transmission, par ledit objet portatif audit terminal, dudit échantillon biométrique chiffré ; et
- transmission, par ledit terminal audit serveur d'authentification, dudit échantillon biométrique chiffré.

5. Procédé selon l'une quelconque des revendications 1 à 4, **caractérisé en ce qu'**il comprend une phase d'apprentissage comprenant les étapes suivantes :
- capture d'un échantillon biométrique de référence provenant d'un utilisateur autorisé ;
- création, dans ledit serveur d'authentification, de ladite signature de référence à partir dudit échantillon biométrique de référence ;
- stockage, par ledit serveur d'authentification, de ladite signature de référence dans ledit serveur d'authentification.

6. Procédé selon l'une quelconque des revendications 1 à 5, **caractérisé en ce que** ledit capteur biométrique appartient au groupe comprenant :
- les capteurs d'empreintes digitales ;
- les capteurs d'empreintes palmaires ;
- les capteurs d'empreintes de rétine ;
- les capteurs d'empreintes d'iris ;
- les capteurs de formes de visage.

7. Produit programme d'ordinateur téléchargeable depuis un réseau de communication et/ou stocké sur un support lisible par ordinateur et/ou exécutable par un microprocesseur, **caractérisé en ce qu'**il comprend des instructions de code de programme pour l'exécution des étapes du procédé d'authentification selon l'une quelconque des revendications 1 à 6.

8. Serveur d'authentification comprenant des moyens d'authentification biométrique d'un utilisateur à authentifier à partir d'un objet portatif comprenant au moins un capteur biométrique, ledit objet portatif étant adapté pour coopérer avec un terminal de lecture,
**caractérisé en ce que** lesdits moyens d'authentification biométrique comprennent :
- des moyens de réception, sous une forme sécurisée, d'un échantillon biométrique chiffré provenant dudit objet portatif, à l'issue d'une étape de capture et de chiffrement dudit échantillon biométrique à comparer provenant dudit utilisateur à authentifier;
- des moyens de détermination d'une signature à authentifier à partir dudit échantillon biométrique ;
- des moyens de comparaison de ladite signature à authentifier à une signature de référence.

9. Serveur d'authentification selon la revendication 8, **caractérisé en ce qu'**il comprend :
- des moyens de transmission d'un défi audit objet portatif ;
- des moyens de réception et de validation de la réponse audit défi provenant dudit objet portatif ;
- des moyens de déchiffrement dudit échantillon chiffré, délivrant un échantillon déchiffré ;
- des moyens de détermination d'une signature à authentifier, à partir dudit échantillon déchiffré ;
- des moyens d'authentification dudit utilisateur à authentifier, par comparaison de ladite signature à authentifier à une signature de référence, délivrant une décision, positive ou négative, d'authentification ;
- des moyens de transmission audit terminal, de ladite décision d' authentification.

10. Serveur d'authentification selon l'une quelconque des revendications 8 et 9, **caractérisé en ce qu'**il comprend des moyens d'apprentissage comprenant :
- des moyens de capture d'un échantillon biométrique de référence provenant d'un utilisateur autorisé ;
- des moyens de création de ladite signature de référence à partir dudit échantillon biométrique de référence ;
- de moyens de stockage de ladite signature de référence dans ledit serveur d'authentification.

11. Terminal de lecture d'objet portatif adapté pour recevoir un objet portatif comprenant au moins un capteur biométrique dédié à une authentification biométrique, auprès d'un serveur d'authentification, d'au moins un utilisateur à authentifier,
**caractérisé en ce qu'**il comprend :
- des moyens de réception d'un échantillon biométrique chiffré provenant dudit utilisateur à authentifier et transmis par ledit objet portatif ;
- des moyens de transmission dudit échantillon biométrique chiffré audit serveur d'authentification via un réseau de communication ;
- des moyens de réception d'une décision d'authentification concernant ledit utilisateur à authentifier en fonction d'un résultat d'une comparaison d'une signature à authentifier, créée à partir dudit échantillon biométrique chiffré, par ledit serveur d'authentification, à une signature de référence, ladite décision étant transmise par ledit serveur d'authentification via ledit réseau de communication.

12. Objet portatif comprenant au moins un capteur biométrique dédié à une authentification biométrique, auprès d'un serveur d'authentification, d'au moins un utilisateur à authentifier, ledit objet étant adapté pour coopérer avec un terminal de lecture, ledit capteur biométrique comprenant des moyens de capture d'un échantillon biométrique à comparer provenant dudit utilisateur à authentifier,
**caractérisé en ce qu'**il comprend également :
- des moyens de réception d'un défi, transmis par ledit serveur d'authentification ;
- des moyens de chiffrement dudit échantillon biométrique à comparer, à l'aide dudit défi, délivrant un échantillon biométrique chiffré ;
- des moyens de transmission dudit échantillon biométrique chiffré audit serveur d'authentification via un réseau de communication.

13. Objet portatif selon la revendication 12, **caractérisé en ce que** ledit objet portatif est une carte à puce.
